# EUROPEAN PATENT APPLICATION

(11) **EP 4 744 922 A1**
(43) Date of publication of application: **20.05.2026**
(21) Application number: 25211170.3
(22) Date of filing: 24.10.2025
(51) Int. Cl.: B60K 1/00

(54) **VEHICLE LOWER PORTION STRUCTURE**

(30) Priority: 15.11.2024 JP 2024200036
(71) Applicant: TOYOTA JIDOSHA KABUSHIKI KAISHA, Toyota-shi, Aichi-ken 471-8571 (JP)
(72) Inventor: YAMAMOTO, Yo, TOYOTA-SHI, AICHI-KEN, 471-8571 (JP)
(74) Representative: Cabinet Beau de Loménie

(57) **Abstract**

A vehicle lower portion structure (10) comprises a pair of rocker portions (24) disposed at both vehicle transverse direction sides of a vehicle body lower portion (12A) and extending in a vehicle longitudinal direction, at least one cross member portion (30) that extends in a vehicle transverse direction and having both end portions respectively connected to the pair of rocker portions (24), and a reinforcing panel portion (50) disposed at a vehicle front side or a vehicle rear side of the cross member portion (30) between the pair of rocker portions (24) so as to overlap with the rocker portions (24) as seen from the vehicle transverse direction, and at which concave portions (50A), which are convex toward a vehicle lower side and extend in the vehicle transverse direction, and convex portions (50B), which are convex toward a vehicle upper side and extend in the vehicle transverse direction, are provided alternately in the vehicle longitudinal direction.

## Description

### BACKGROUND

### Technical Field

The present disclosure relates to a vehicle lower portion structure.

### Related Art

Japanese Patent Application Laid-Open (JP-A) No. 2024-069728 discloses a vehicle structural body. In this vehicle structural body, cross member portions are disposed between a pair of rocker portions that extend in the vehicle longitudinal direction, and side collision load that is inputted to the vehicle can be supported at the cross member portions.

It is thought that, in JP-A No. 2024-069728, when side collision load is inputted to a rocker portion, at the places of the rocker portion that are not supported by the cross member portions, the rocker portion will deform toward the vehicle transverse direction inner side, and the side collision load will also affect the inner side of the passenger compartment.

In order to avoid this, it is thought to make the plate thickness of the rocker portions thicker and ensure the rigidity of the rocker portions with respect to side collision loads. However, if such a structure is employed, it is conceivable that the vehicle body will become heavier.

Namely, in the above-described related art, there is room for improvement with regard to the point of suppressing an increase in the weight of a vehicle body while suppressing the effects of side collision load, which is inputted to a rocker portion, on the passenger compartment side.

The present disclosure provides a vehicle lower portion structure that, while suppressing the effects of side collision load, which is inputted to a rocker portion, on the passenger compartment side, can suppress an increase in the weight of a vehicle body.

### SUMMARY

A vehicle lower portion structure relating to a first aspect has: a pair of rocker portions disposed at both vehicle transverse direction sides of a vehicle body lower portion and extending in a vehicle longitudinal direction; at least one cross member portion that extends in a vehicle transverse direction and having both end portions respectively connected to the rocker portions; and a reinforcing panel portion disposed at a vehicle front side or a vehicle rear side of the cross member portion between the pair of rocker portions so as to overlap with the rocker portions as seen from the vehicle transverse direction, and at which concave portions, which are convex toward a vehicle lower side and extend in the vehicle transverse direction, and convex portions, which are convex toward a vehicle upper side and extend in the vehicle transverse direction, are provided alternately in the vehicle longitudinal direction.

In accordance with the vehicle lower portion structure relating to the first aspect, the pair of rocker portions are disposed at the both vehicle transverse direction sides of the vehicle body lower portion, and these rocker portions respectively extend in the vehicle longitudinal direction. Both end portions of the at least one cross member portion that extends in the vehicle transverse direction are connected to the rocker portions respectively. Therefore, in the present aspect, side collision load that is inputted to a rocker portion can be supported at the cross member portion.

By the way, when a side collision load is inputted to a rocker portion, it is conceivable that, at the places of the rocker portion that are not supported by the cross member portion, the rocker portion will deform toward the vehicle transverse direction inner side, and the side collision load will affect the passenger compartment inner side as well.

With regard to this point, it has been thought to make the plate thickness of the rocker portions thicker and ensure the rigidity of the rocker portions with respect to side collision loads. However, if such a structure is employed, the vehicle body will become heavier, and therefore, such a structure is not preferable from the standpoint of lightening the weight of the vehicle body.

Here, in the present aspect, the reinforcing panel portion is disposed at the vehicle front side or the vehicle rear side of the cross member portion, between the pair of rocker portions and so as to overlap with the rocker portions as seen from the vehicle transverse direction. Further, the concave portions, which are convex toward the vehicle lower side and extend in the vehicle transverse direction, and the convex portions, which are convex toward the vehicle upper side and extend in the vehicle transverse direction, are provided alternately in the vehicle longitudinal direction at the reinforcing panel portion.

Therefore, in the present aspect, the second moment of area of the cross-section, seen from the vehicle transverse direction, of the reinforcing panel portion is ensured, and, at the time of input of side collision load to a rocker portion, at the places of the rocker portion that are not supported by the cross member portion, the side collision load can be dispersed and supported at the reinforcing panel portion.

As a result, the rocker portion deforming toward the vehicle transverse direction inner side due to side collision load can be suppressed, without making the plate thickness of the rocker portions thicker.

In a vehicle lower portion structure relating to a second aspect, in the vehicle lower portion structure relating to the first aspect, a flat panel portion that is shaped as a flat plate is disposed at a vehicle upper side of the reinforcing panel portion.

In accordance with the vehicle lower portion structure relating to the second aspect, the flat panel portion that is flat-plate-shaped is disposed at the vehicle upper side of the reinforcing panel portion. Load from the passenger compartment inner side is received at the flat panel portion, and this load can be dispersed to the reinforcing panel portion. Therefore, in the present aspect, equipment and the like disposed at the vehicle lower side of the flat panel portion and the reinforcing panel portion can be protected from load that is from the passenger compartment inner side.

In a vehicle lower portion structure relating to a third aspect, in the vehicle lower portion structure relating to the second aspect, as a result of the flat panel portion being joined to the convex portions, the flat panel portion, together with portions of the reinforcing panel portion including the concave portions, configures a concave-side closed cross-section structural portion having a cross-section as viewed from the vehicle transverse direction that is a closed cross-section.

In accordance with the vehicle lower portion structure relating to the third aspect, as a result of the flat panel portion being joined to the convex portions of the reinforcing panel portion, the flat panel portion, together with portions of the reinforcing panel portion including the concave portions, configures the concave-side closed cross-section structural portion having a cross-section as viewed from the vehicle transverse direction that is a closed cross-section. Therefore, load from the passenger compartment inner side is absorbed due to the concave-side closed cross-section structural portion deforming. The probability that equipment and the like that is disposed at the vehicle lower side of the flat panel portion and the reinforcing panel portion will be protected from load that is from the passenger compartment inner side can be increased.

In a vehicle lower portion structure relating to a fourth aspect, the vehicle lower portion structure relating to any one of the first aspect through the third aspect further has a battery disposed between the pair of rocker portions at a vehicle lower side of the cross member portion, wherein the reinforcing panel portion is disposed at a vehicle upper side of the battery.

In accordance with the vehicle lower portion structure relating to the fourth aspect, when side collision load is inputted to a rocker portion, at a place where the cross member portion is not disposed at the upper side of the battery, the side collision load is supported at the reinforcing panel portion, and the battery can be protected.

In a vehicle lower portion structure relating to a fifth aspect, in the vehicle lower portion structure relating to the fourth aspect, the reinforcing panel portion is attached to an upper surface of a battery case that configures an outer shell of the battery.

In accordance with the vehicle lower portion structure relating to the fifth aspect, the reinforcing panel portion is attached to the upper surface of the battery case that configures the outer shell of the battery. Therefore, the degrees of freedom in the attached position of the reinforcing panel portion can be ensured. As a result, even if the position of the cross member portion is changed in accordance with the specifications of the vehicle, the position of the reinforcing panel portion can be set at position that is suitable for supporting side collision loads.

In a vehicle lower portion structure relating to a sixth aspect, in the vehicle lower portion structure relating to the fifth aspect, due to the concave portions and the upper surface being joined, a convex-side closed cross-section structural portion, whose cross-section viewed from the vehicle transverse direction is a closed cross-section, is structured by portions of the battery case and portions of the reinforcing panel portion including the convex portions.

In accordance with the vehicle lower portion structure relating to the sixth aspect, due to the concave portions of the reinforcing panel portion and the upper surface of the battery case being joined, the convex-side closed cross-section structural portion, whose cross-section viewed from the vehicle transverse direction is a closed cross-section, is structured by portions of the battery case and portions of the reinforcing panel portion including the convex portions. Therefore, when side collision load is inputted to the rocker portion, at a place of the rocker portion which place is not supported by the cross member portion, the side collision load can be dispersed and supported at the convex-side closed cross-section structural portion, and the side collision load being inputted to the battery side can be suppressed.

In a vehicle lower portion structure relating to a seventh aspect, in the vehicle lower portion structure relating to the fourth aspect depending on the first aspect, a flat panel portion that is shaped as a flat plate is disposed at a vehicle upper side of the reinforcing panel portion, the flat panel portion is joined to the convex portions, the reinforcing panel portion is attached to an upper surface of a battery case that configures an outer shell of the battery, and a vehicle longitudinal direction width of upper surface portions, which are joined to the flat panel portion, of the convex portions is greater than a vehicle longitudinal direction width of lower surface portions, which are joined to the upper surface, of the concave portions.

In accordance with the vehicle lower portion structure relating to the seventh aspect, the width in the vehicle longitudinal direction of the upper surface portions, which are joined to the flat panel portion, of the convex portions of the reinforcing panel portion is made to be larger than the width in the vehicle longitudinal direction of the lower surface portions, which are joined to the upper surface of the battery case, of the concave portions of the reinforcing panel portion. Therefore, the surface area, which receives load from the passenger compartment inner side, at the reinforcing panel portion is ensured, and this load is dispersed to the reinforcing panel portion, and the effects of this load on the battery can be reduced.

In a vehicle lower portion structure relating to an eighth aspect, the vehicle lower portion structure relating to any one of the fifth aspect through the seventh aspect further has: plural longitudinal direction member portions that are provided at an interior of the battery case, and that extend in the vehicle longitudinal direction so as to intersect with the concave portions and the convex portions as seen from a vehicle vertical direction, and that are disposed spaced apart in the vehicle transverse direction; and load transmitting portions that are disposed at the interior of the battery case, and that are configured to transmit load between an upper portion of the battery case and the longitudinal direction member portions.

In accordance with the vehicle lower portion structure relating to the eighth aspect, the plural longitudinal direction member portions are provided at the interior of the battery case. These longitudinal direction member portions extend in the vehicle longitudinal direction so as to intersect with the concave portions and the convex portions of the reinforcing panel portion as seen from the vehicle vertical direction, and are disposed spaced apart in the vehicle transverse direction.

Further, the load transmitting portions are disposed at the interior of the battery case, and these load transmitting portions are configured to transmit load between the upper portion of the battery case and the longitudinal direction member portions. Therefore, load that is from the passenger compartment inner side can be transmitted via the load transmitting portions from the concave portions and the convex portions of the reinforcing panel portion to, and supported at, the longitudinal direction member portions, and the effects of this load on the inner side of the battery case can be reduced.

In a vehicle lower portion structure relating to a ninth aspect, in the vehicle lower portion structure relating to the eighth aspect, the load transmitting portions include end plate portions of battery cells that structure portions of the battery and are disposed along the longitudinal direction member portions.

In accordance with the vehicle lower portion structure relating to the ninth aspect, the load transmitting portions include end plate portions of the battery cells that structure portions of the battery and are disposed along the longitudinal direction member portions. Therefore, the end plate portions can structure portions of the load transmission paths from the reinforcing panel portion to the longitudinal direction member portions, without separately providing members at the inner side of the battery case.

In a vehicle lower portion structure relating to a tenth aspect, in the vehicle lower portion structure relating to any one of the first aspect through the ninth aspect, vehicle transverse direction end portions of the reinforcing panel portion contact side surfaces at vehicle transverse direction inner sides of the rocker portions.

In accordance with the vehicle lower portion structure relating to the tenth aspect, the vehicle transverse direction end portions of the reinforcing panel portion contact the side surfaces at the vehicle transverse direction inner sides of the rocker portions. Side collision load that is inputted to a rocker portion can be supported directly at the reinforcing panel portion.

As described above, the vehicle lower portion structure relating to the present disclosure has the excellent effect of being able to suppress an increase in the weight of the vehicle body while suppressing the effects of side collision load, which is inputted to a rocker portion, on the passenger compartment side.

### BRIEF DESCRIPTION OF THE DRAWINGS

Exemplary embodiments of the present invention will be described in detail based on the following figures, wherein:
Fig. 1 is a plan view schematically illustrating the structure of a vehicle to which a vehicle lower portion structure relating to a present embodiment is applied;
Fig. 2 is a cross-sectional view schematically illustrating the structure of the vehicle to which the vehicle lower portion structure relating to the present embodiment is applied (a cross-sectional view illustrating the state cut along line 2-2 of Fig. 1);
Fig. 3 is a cross-sectional view schematically illustrating the structure of the vehicle to which the vehicle lower portion structure relating to the present embodiment is applied (a cross-sectional view illustrating the state cut along line 3-3 of Fig. 1);
Fig. 4 is a cross-sectional view schematically illustrating the structure of main portions of the vehicle to which the vehicle lower portion structure relating to the present embodiment is applied (a cross-sectional view illustrating the state cut along line 4-4 of Fig. 1); and
Fig. 5 is a cross-sectional view schematically illustrating a battery pack that is installed in the vehicle to which the vehicle lower portion structure relating to the present embodiment is applied, and configures at the periphery thereof (a cross-sectional view illustrating the state cut along line 5-5 of Fig. 1).

### DETAILED DESCRIPTION

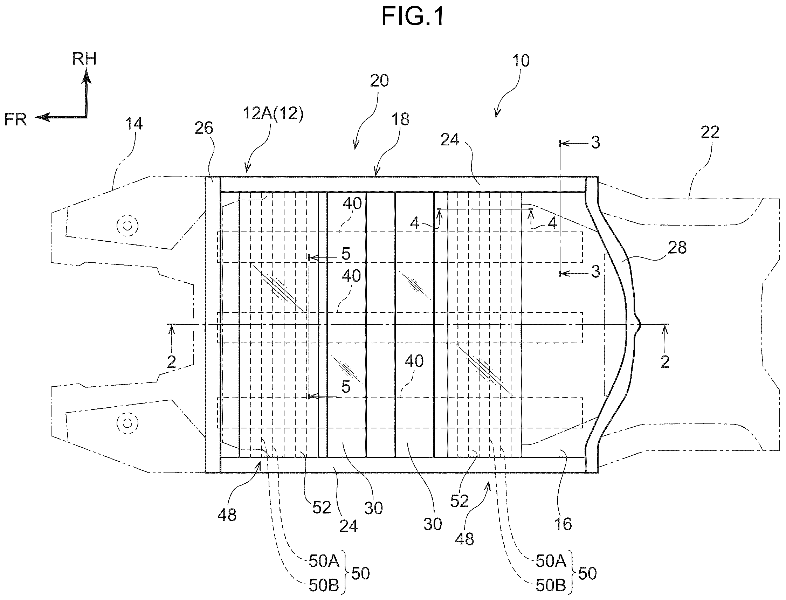

An example of a vehicle lower portion structure relating to the present disclosure is described hereinafter by using Fig. 1 through Fig. 5. Note that arrow FR that is shown appropriately in the respective drawings indicates the front side, arrow UP indicates the vehicle upper side, and arrow RH indicates the vehicle transverse direction right side.

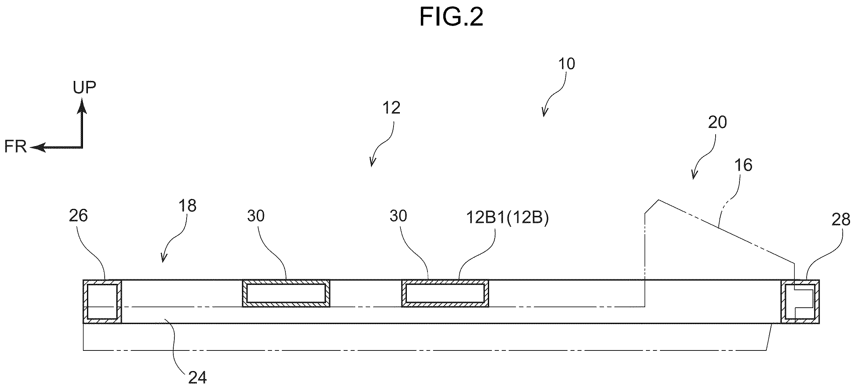

First, the schematic structure of a vehicle 10 to which the vehicle lower portion structure relating to the present embodiment is applied is described by using Fig. 1 and Fig. 2. Note that, in the present embodiment, because the vehicle 10 basically is structured so as to have left-right symmetry, hereinafter, when describing portions that are common to both vehicle transverse direction sides, the structures of the portions at the vehicle transverse direction right side of the vehicle 10 are described, and description of the structures of the portions at the vehicle transverse direction left side is omitted as appropriate.

A vehicle body 12 of the vehicle 10 has a front part 14 that is diecast aluminum and configures the vehicle front side portion of the vehicle body 12, a center part 20 structuring the vehicle longitudinal direction central portion of the vehicle body 12 and having a battery pack 16 serving as a battery and a center frame 18 holding the battery pack 16, and a rear part 22 that is diecast aluminum and configures the vehicle rear side portion of the vehicle body 12. Note that an unillustrated power unit that includes a motor and the like is installed in the front part 14. The vehicle 10 travels due to the power unit being driven by electric power supplied from the battery pack 16.

Describing the structure of the center frame 18 in detail, the center frame 18 is structured to include a pair of rocker portions 24 disposed at the both vehicle transverse direction sides at a vehicle body lower portion 12A and extending in the vehicle longitudinal direction, a front cross portion 26 connecting the vehicle front side end portions of the rocker portions 24, and a rear cross portion 28 connecting the vehicle rear side end portions of the rocker portions 24.

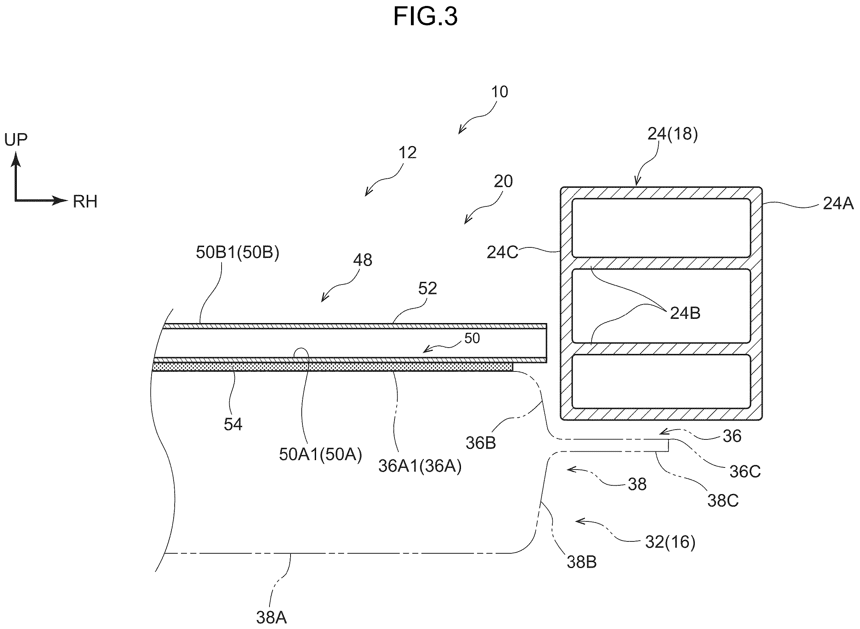

Referring to Fig. 3, the rocker portion 24 is structured by an extrusion molded part of an aluminum alloy. An outer peripheral portion 24A of the rocker portion 24 is shaped as a rectangular tube that extends in the vehicle longitudinal direction. The inner side of the outer peripheral portion 24A is sectioned into plural regions by partitioning wall portions 24B.

The front cross portion 26 is structured by an extrusion molded part of an aluminum alloy, and is shaped as a rectangular tube that extends in the vehicle transverse direction.

The rear cross portion 28 is structured by an extrusion molded part of an aluminum alloy, and is curved so as to be convex toward the vehicle rear side.

A pair of cross member portions 30 span between the central portions of the pair of rocker portions 24. The cross member portions 30 are structured by extrusion molded parts of an aluminum alloy, and the outer peripheral portions thereof are shaped as rectangular tubes that extend in the vehicle transverse direction. The inner sides of these outer peripheral portions are sectioned in the vehicle longitudinal direction by partitioning wall portions.

Note that the cross member portions 30 are disposed with a predetermined interval therebetween in the vehicle longitudinal direction, and the both end portions thereof are connected to the rocker portions 24 via unillustrated connecting members. Further, unillustrated front seats and rear seats are supported at the cross member portions 30. The cross member portions 30 can be considered as structuring portions of a floor portion 12B1 of a passenger compartment 12B.

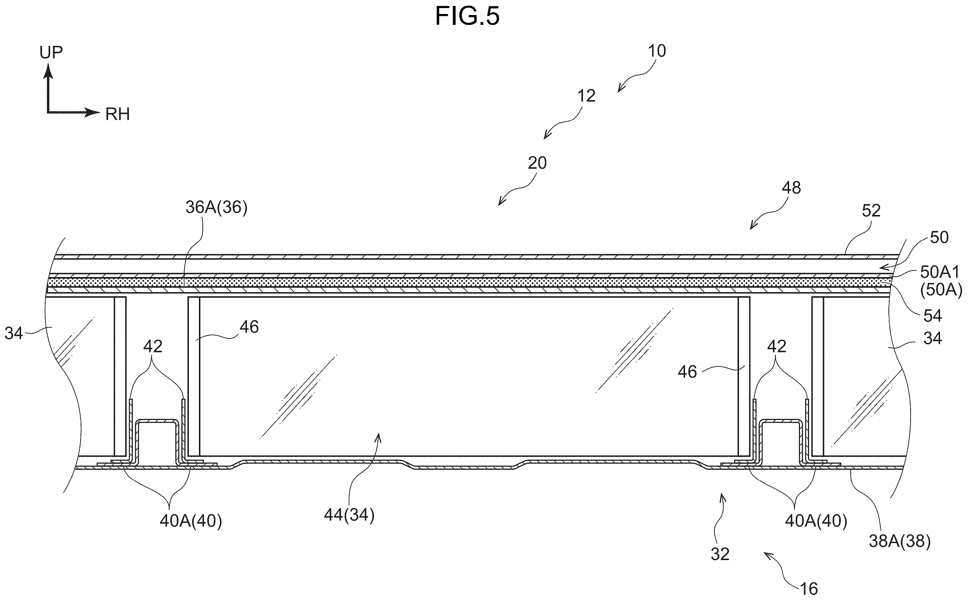

On the other hand, the main portion of the battery pack 16 is positioned at the vehicle lower sides of the rocker portions 24, and is disposed between the pair of rocker portions 24 as seen from the vehicle vertical direction. As illustrated in Fig. 5 as well, the battery pack 16 is structured to include a battery case 32 structuring the outer shell of the battery pack 16, and plural battery cells 34 accommodated in the battery case 32.

The main portion of the battery case 32 is structured of an aluminum alloy. The battery case 32 has a case upper 36 serving as an upper portion and structuring the vehicle upper side portion of the battery case 32, and a case lower 38 structuring the vehicle lower side portion of the battery case 32.

As illustrated in Fig. 3 as well, the case upper 36 is structured to include an upper wall portion 36A structuring the vehicle upper side portion of the case upper 36 and extending in the vehicle transverse direction and the vehicle longitudinal direction, peripheral wall portions 36B provided along the peripheral edge portions of the upper wall portion 36A, and flange portions 36C extending out from the lower edge portions of the peripheral wall portions 36B toward the outer sides of the battery case 32.

On the other hand, the case lower 38 is structured to include a lower wall portion 38A structuring the vehicle lower side portion of the case lower 38 and extending in the vehicle transverse direction and the vehicle longitudinal direction, peripheral wall portions 38B provided along the peripheral edge portions of the lower wall portion 38A, and flange portions 38C extending out from the upper edge portions of the peripheral wall portions 38B toward the outer sides of the battery case 32.

The case upper 36 and the case lower 38 are made integral due to the flange portions 36C and the flange portions 38C being attached together by unillustrated mounting members. Note that the flange portions 36C and the flange portions 38C are positioned at the vehicle lower sides of the rocker portions 24, and are attached to the rocker portions 24 via unillustrated fastening members.

Returning to Fig. 5, plural (three as an example) longitudinal direction member portions 40 that extend in the vehicle longitudinal direction are provided at the interior of the battery case 32 at the upper surface of the lower wall portion 38A of the case lower 38 spaced apart in the vehicle transverse direction. Note that the three longitudinal direction member portions 40 are disposed so as to be symmetrical with respect to the vehicle transverse direction center, as seen from the vehicle vertical direction (see Fig. 1).

In detail, the cross-sectional shape of the longitudinal direction member portion 40 as seen from the vehicle longitudinal direction is the shape of a hat whose vehicle lower side is open. Flange portions 40A of the longitudinal direction member portion 40 are joined to the lower wall portion 38A at unillustrated joined portions that are formed by welding or the like.

Further, cell holding portions 42, whose cross-sections viewed from the vehicle longitudinal direction are L-shaped, are provided at a vehicle transverse direction one side and another side of the longitudinal direction member portion 40. The battery cells 34 are held by these cell holding portions 42.

The battery cell 34 is structured to include a cell case portion 44 that configures the outer shell of the battery cell 34 and is shaped as a rectangular tube whose length direction is the vehicle transverse direction, end plates 46 serving as load transmitting portions and sealing the end portions of the cell case portion 44, and an unillustrated electrode body disposed at the inner side of the cell case portion 44.

The battery cells 34 that are structured as described above are disposed such that a plurality thereof are stacked in the vehicle longitudinal direction so as to run along the longitudinal direction member portions 40 and with the thickness directions of the battery cells 34 being the vehicle longitudinal direction. Further, the vehicle upper side portions of the battery cells 34 are fit in the inner side of the case upper 36, and the vehicle lower side portions of the battery cells 34 are fit in the inner side of the case lower 38.

In the state in which the battery cells 34 are disposed in the battery case 32 as described above, the end plates 46 are in states of overlapping with the flange portions 40A of the longitudinal direction member portions 40 as seen from the vehicle vertical direction. Namely, the end plates 46 are disposed along the longitudinal direction member portions 40. Note that the vehicle upper side end portions of the end plates 46 are in states of being close to the upper wall portion 36A of the case upper 36.

As illustrated in Fig. 1, in the present embodiment, reinforcing boards 48 are disposed at the vehicle front side and the vehicle rear side of the pair of cross member portions 30, respectively, at the upper side of the battery case 32 and between the pair of rocker portions 24 as seen from the vehicle transverse direction.

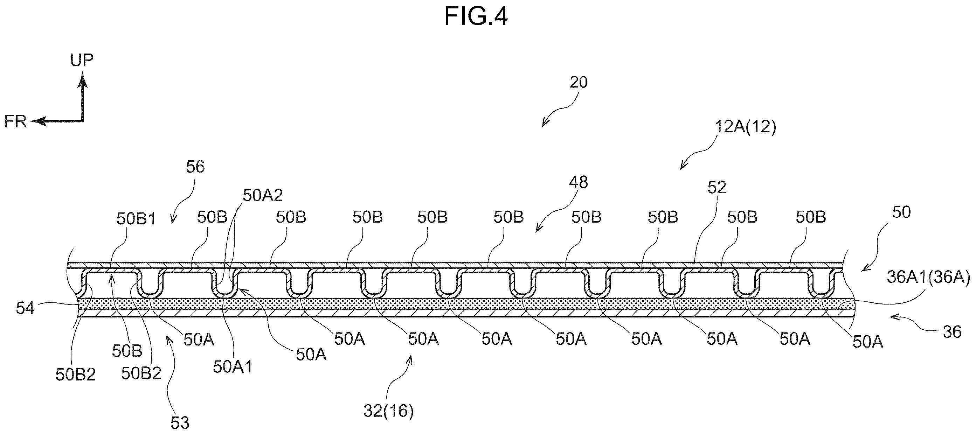

As illustrated in Fig. 4, the reinforcing board 48 is structured to include a reinforcing panel portion 50, and a flat panel portion 52 disposed at the vehicle upper side of the reinforcing panel portion 50.

The reinforcing panel portion 50 is structured by a steel plate being press worked for example, and is formed in a rectangular shape as seen from the vehicle vertical direction. Concave portions 50A that are convex toward the vehicle lower side and extend in the vehicle transverse direction, and convex portions 50B that are convex toward the vehicle upper side and extend in the vehicle transverse direction, are provided alternately in the vehicle longitudinal direction at the reinforcing panel portion 50. Note that the concave portions 50A and the convex portions 50B are formed so as to span from a vehicle transverse direction one side end portion to the vehicle transverse direction another side end portion of the reinforcing panel portion 50.

In detail, the concave portion 50A is structured to include a lower surface portion 50A1 that configures the vehicle lower side portion of the concave portion 50A, and a pair of vertical wall portions 50A2 extending toward the vehicle upper side from the lower surface portion 50A1.

On the other hand, the convex portion 50B is structured to include an upper surface portion 50B1 that configures the vehicle upper side portion of the convex portion 50B and whose vehicle longitudinal direction width is greater than the vehicle longitudinal direction width of the lower surface portion 50A1, and a pair of vertical wall portions 50B2 extending toward the vehicle lower side from the upper surface portion 50B1.

Note that because the concave portions 50A and the convex portions 50B are provided continuously in the vehicle longitudinal direction, in appearance, there are no boundaries therebetween. Namely, although different reference numerals are given to the vertical wall portions 50A2 and the vertical wall portions 50B2 for convenience, they designate the same regions.

Further, as illustrated in Fig. 1, as seen from the vehicle vertical direction, the concave portions 50A and the convex portions 50B are orthogonal to the longitudinal direction member portions 40 of the battery case 32.

Returning to Fig. 4, as an example, the flat panel portion 52 is structured by a steel plate, and is formed in the shape of a rectangular, flat plate as seen from the vehicle vertical direction. As a result of the flat panel portion 52 being joined to the upper surface portions 50B1 of the convex portions 50B at unillustrated joined portions that are formed by spot welding or the like, the flat panel portion 52, together with the portions of the reinforcing panel portion 50 including the concave portions 50A, configures a concave-side closed cross-section structural portion 53 whose cross-section seen from the vehicle transverse direction is a closed cross-section.

Further, due to the lower surface portions 50A1 of the concave portions 50A and an upper surface 36A1 of the upper wall portion 36A of the case upper 36 being joined at a joined portion 54 that is formed by an adhesive or the like, a convex-side closed cross-section structural portion 56, whose cross-section seen from the vehicle transverse direction is a closed cross-section, is structured by portions of the reinforcing panel portion 50 including the convex portions 50B and portions of the upper wall portion 36A.

Note that, as illustrated in Fig. 3, the reinforcing boards 48 that are structured as described above are disposed so as to overlap with the rocker portions 24 as seen from the vehicle transverse direction. Further, the vehicle transverse direction outer side end portions of the reinforcing boards 48 are in a state of being apart, by a predetermined interval, from side surfaces 24C that are at the vehicle transverse direction inner sides of the rocker portions 24.

### (Operation and Effects of Present Embodiment)

### Operation and effects of the present embodiment are described next.

In the present embodiment, as illustrated in Fig. 1, the pair of rocker portions 24 are disposed at the both vehicle transverse direction sides of the vehicle body lower portion 12A, and these rocker portions 24 respectively extend in the vehicle longitudinal direction. The both end portions of the cross member portions 30 that extend in the vehicle transverse direction are connected to the rocker portions 24 respectively. Therefore, in the present embodiment, a side collision load that is inputted to the rocker portion 24 can be supported by the cross member portions 30.

By the way, when a side collision load is inputted to the rocker portion 24, it is conceivable that, at the places of the rocker portion 24 that are not supported by the cross member portions 30, the rocker portion 24 will deform toward the vehicle transverse direction inner side, and the side collision load will affect the passenger compartment 12B inner side as well.

With regard to this point, it has been thought to make the plate thickness of the rocker portions 24 thicker and ensure the rigidity of the rocker portions 24 with respect to side collision loads. However, if such a structure is employed, the vehicle body 12 will become heavier, and therefore, such a structure is not preferable from the standpoint of lightening the weight of the vehicle body 12.

Here, in the present embodiment, as illustrated in Fig. 3 and Fig. 4 as well, the reinforcing panel portions 50 are disposed at the vehicle front side and the vehicle rear side of the cross member portions 30, between the pair of rocker portions 24 and so as to overlap with the rocker portions 24 as seen from the vehicle transverse direction. Further, the concave portions 50A, which are convex toward the vehicle lower side and extend in the vehicle transverse direction, and the convex portions 50B, which are convex toward the vehicle upper side and extend in the vehicle transverse direction, are provided alternately in the vehicle longitudinal direction at the reinforcing panel portions 50.

Therefore, in the present embodiment, the second moments of area of the cross-sections, seen from the vehicle transverse direction, of the reinforcing panel portions 50 are ensured, and, at the time of input of side collision load to the rocker portion 24, at the places of the rocker portion 24 that are not supported by the cross member portions 30, the side collision load can be dispersed and supported at the reinforcing panel portions 50.

As a result, the rocker portion 24 deforming toward the vehicle transverse direction inner side due to side collision load can be suppressed, without making the plate thickness of the rocker portions 24 thicker.

Further, in the present embodiment, the flat panel portions 52 that are flat-plate-shaped are disposed at the vehicle upper sides of the reinforcing panel portions 50. Load from the passenger compartment 12B inner side (e.g., concentrated load due to stiletto heels) is received at the flat panel portions 52, and this load can be dispersed to the reinforcing panel portions 50. Therefore, in the present embodiment, equipment and the like disposed at the vehicle lower sides of the flat panel portions 52 and the reinforcing panel portions 50 can be protected from load that is from the passenger compartment 12B inner side.

In the present embodiment, as a result of the flat panel portions 52 being joined to the convex portions 50B of the reinforcing panel portions 50, the flat panel portions 52, together with portions of the reinforcing panel portions 50 including the concave portions 50A, structure the concave-side closed cross-section structural portions 53 whose cross-sections viewed from the vehicle transverse direction are closed cross-sections. Therefore, load from the passenger compartment 12B inner side is absorbed due to the concave-side closed cross-section structural portions 53 deforming. The probability that equipment and the like that is disposed at the vehicle lower sides of the flat panel portions 52 and the reinforcing panel portions 50 will be protected from load that is from the passenger compartment 12B inner side can be increased.

Further, in the present embodiment, when side collision load is inputted to the rocker portion 24, at places where the cross member portions 30 are not disposed at the upper side of the battery pack 16, the side collision load is supported at the reinforcing panel portions 50, and the battery pack 16 can be protected.

In the present embodiment, the reinforcing panel portions 50 are attached to the upper surface 36A1 of the battery case 32 that configures the outer shell of the battery pack 16. Therefore, the degrees of freedom in the attached positions of the reinforcing panel portions 50 can be ensured. As a result, even if the positions of the cross member portions 30 are changed in accordance with the specifications of the vehicle 10, the positions of the reinforcing panel portions 50 can be set at positions that are suitable for supporting side collision loads.

Further, in the present embodiment, due to the concave portions 50A of the reinforcing panel portions 50 and the upper surface 36A1 of the battery case 32 being joined, the convex-side closed cross-section structural portions 56, whose cross-sections viewed from the vehicle transverse direction are closed cross-sections, are structured by portions of the battery case 32 and portions of the reinforcing panel portions 50 including the convex portions 50B. Therefore, when side collision load is inputted to the rocker portion 24, at the places of the rocker portion 24 that are not supported by the cross member portions 30, the side collision load can be dispersed and supported at the convex-side closed cross-section structural portions 56, and the side collision load being inputted to the battery pack 16 side can be suppressed.

Further, in the present embodiment, the width in the vehicle longitudinal direction of the upper surface portions 50B1, which are joined to the flat panel portions 52, of the convex portions 50B of the reinforcing panel portions 50 are made to be larger than the width in the vehicle longitudinal direction of the lower surface portions 50A1, which are joined to the upper surface 36A1 of the battery case 32, of the concave portions 50A of the reinforcing panel portions 50. Therefore, the surface area, which receives load from the passenger compartment 12B inner side, at the reinforcing panel portions 50 is ensured, and this load is dispersed to the reinforcing panel portions 50, and the effects of this load on the battery pack 16 can be reduced.

In the present embodiment, the plural longitudinal direction member portions 40 are provided at the interior of the battery case 32. As illustrated in Fig. 1 as well, these longitudinal direction member portions 40 extend in the vehicle longitudinal direction so as to intersect with the concave portions 50A and the convex portions 50B of the reinforcing panel portions 50 as seen from the vehicle vertical direction, and are disposed spaced apart in the vehicle transverse direction.

Further, the end plates 46 of the battery cells 34 are disposed at the interior of the battery case 32, and these end plates 46 are configured to transmit load between the case upper 36 of the battery case 32 and the longitudinal direction member portions 40. Therefore, load from the passenger compartment 12B inner side can be transmitted via the end plates 46 from the concave portions 50A and the convex portions 50B of the reinforcing panel portions 50 to, and supported at, the longitudinal direction member portions 40, and the effects of this load on the inner side of the battery case 32 can be reduced.

In addition, in the present embodiment, as described above, the end plates 46 function as load transmitting portions that transmit load, which is from the passenger compartment 12B inner side, from the reinforcing panel portions 50 to the longitudinal direction member portions 40. Therefore, the end plates 46 can structure portions of the load transmission paths from the reinforcing panel portions 50 to the longitudinal direction member portions 40, without separately providing members that function as load transmitting portions at the inner side of the battery case 32.

As described above, in the present embodiment, while an increase of the weight of the vehicle body 12 is suppressed, the effects of side collision load, which is inputted to the rocker portion 24, on the passenger compartment 12B side can be suppressed.

### <Supplemental Description of Above Embodiment>

In the above-described embodiment, the reinforcing boards 48 are joined to the battery case 32, and the vehicle transverse direction outer side end portions of the reinforcing boards 48 are in states of being apart by an interval from the side surfaces 24C at the vehicle transverse direction inner sides of the rocker portions 24. However, the reinforcing boards 48 may be directly supported at the center frame 18. For example, in accordance with the specifications of the vehicle 10, the reinforcing boards 48 may be made to span between the pair of rocker portions 24, and the vehicle transverse direction outer side end portions of the reinforcing boards 48 may be attached to the side surfaces 24C by mounting members or welding.

In accordance with such a structure, the vehicle transverse direction end portions of the reinforcing panel portions 50 contact the side surfaces 24C of the rocker portions 24, and side collision load that is inputted to the rocker portion 24 can be directly supported at the reinforcing panel portions 50.

Further, the reinforcing boards 48 can be provided even if there is no battery pack 16, and the vehicle lower portion structure relating to the present embodiment can be applied also to engine-powered vehicles or the like in which the battery pack 16 is not installed.

Moreover, in the present embodiment, two of the cross member portions 30 are provided with respect to the center frame 18. However, in accordance with the specifications of the vehicle 10, a structure in which one of the cross member portions 30 is disposed with respect to the center frame 18 may be employed.

Still further, in a case in which the interval between the cross member portions 30 is large in accordance with the specifications of the vehicle 10, the reinforcing board 48 may be provided between the cross member portions 30. For example, the reinforcing board 48 may span between the pair of cross member portions 30, and the vehicle front side end portion and the vehicle rear side end portion of the reinforcing board 48 may be attached to the cross member portions 30 by mounting members or welding.

In addition, although the reinforcing panel portions 50 are joined to the upper surface 36A1 of the upper wall portion 36A of the case upper 36 in the present embodiment, a structure in which portions corresponding to the reinforcing panel portions 50 are provided at the upper wall portion 36A may be employed in accordance with the specifications of the vehicle 10. For example, a structure may be employed in which concave portions and convex portions are provided at the upper wall portion 36A alternately in the vehicle longitudinal direction by forming plural bulging portions, which extend in the vehicle transverse direction and bulge out toward the vehicle upper side or the vehicle lower side, at at least a portion of the upper wall portion 36A at a predetermined interval in the vehicle longitudinal direction.

## Claims

1. A vehicle lower portion structure (10), comprising:
a pair of rocker portions (24) disposed at both vehicle transverse direction sides of a vehicle body lower portion (12A) and extending in a vehicle longitudinal direction;
at least one cross member portion (30) that extends in a vehicle transverse direction and having both end portions respectively connected to the pair of rocker portions (24); and
a reinforcing panel portion (50) disposed at a vehicle front side or a vehicle rear side of the cross member portion (30) between the pair of rocker portions (24) so as to overlap with the rocker portions (24) as seen from the vehicle transverse direction, and at which concave portions (50A), which are convex toward a vehicle lower side and extend in the vehicle transverse direction, and convex portions (50B), which are convex toward a vehicle upper side and extend in the vehicle transverse direction, are provided alternately in the vehicle longitudinal direction.

2. The vehicle lower portion structure (10) of claim 1, wherein a flat panel portion (52) that is shaped as a flat plate is disposed at a vehicle upper side of the reinforcing panel portion (50).

3. The vehicle lower portion structure (10) of claim 2, wherein, as a result of the flat panel portion (52) being joined to the convex portions (50B), the flat panel portion (52), together with portions of the reinforcing panel portion (50) including the concave portions (50A), configures a concave-side closed cross-section structural portion (53) having a cross-section as viewed from the vehicle transverse direction that is a closed cross-section.

4. The vehicle lower portion structure (10) of any one of claims 1 to 3, further comprising a battery (16) disposed between the pair of rocker portions (24) at a vehicle lower side of the cross member portion (30),
wherein the reinforcing panel portion (50) is disposed at a vehicle upper side of the battery (16).

5. The vehicle lower portion structure (10) of claim 4, wherein the reinforcing panel portion (50) is attached to an upper surface (36A1) of a battery case (32) that configures an outer shell of the battery (16).

6. The vehicle lower portion structure (10) of claim 5, wherein, as a result of the concave portions (50A) and the upper surface (36A1) being joined, a convex-side closed cross-section structural portion (56), having a cross-section as viewed from the vehicle transverse direction that is a closed cross-section, is configured by portions of the battery case (32) and portions of the reinforcing panel portion (50) including the convex portions (50B).

7. The vehicle lower portion structure (10) of claim 1, further comprising a battery (16) disposed between the pair of rocker portions (24) at a vehicle lower side of the cross member portion (30), wherein:
the reinforcing panel portion (50) is disposed at a vehicle upper side of the battery (16),
a flat panel portion (52) that is shaped as a flat plate is disposed at a vehicle upper side of the reinforcing panel portion (50),
the flat panel portion (52) is joined to the convex portions (50B),
the reinforcing panel portion (50) is attached to an upper surface (36A1) of a battery case (32) that configures an outer shell of the battery (16), and
a vehicle longitudinal direction width of upper surface portions (50B1), which are joined to the flat panel portion (52), of the convex portions (50B) is greater than a vehicle longitudinal direction width of lower surface portions (50A1), which are joined to the upper surface (36A1), of the concave portions (50A).

8. The vehicle lower portion structure (10) of claim 5, further comprising:
a plurality of longitudinal direction member portions (40) that are provided at an interior of the battery case (32), and that extend in the vehicle longitudinal direction so as to intersect with the concave portions (50A) and the convex portions (50B) as seen from a vehicle vertical direction, and that are disposed spaced apart in the vehicle transverse direction; and
load transmitting portions (46) that are disposed at the interior of the battery case (32), and that are configured to transmit load between an upper portion of the battery case (32) and the longitudinal direction member portions (40).

9. The vehicle lower portion structure (10) of claim 8, wherein the load transmitting portions (46) are structured to include end plate portions (46) of battery cells (34) that configure portions of the battery (16) and are disposed along the longitudinal direction member portions (40).

10. The vehicle lower portion structure (10) of any one of claims 1 to 3, wherein vehicle transverse direction end portions of the reinforcing panel portion (50) contact side surfaces at vehicle transverse direction inner sides of the rocker portions (24).
